# EUROPEAN PATENT APPLICATION

(11) **EP 4 412 126 A1**
(43) Date of publication of application: **07.08.2024**
(21) Application number: 21958659.1
(22) Date of filing: 28.09.2021
(51) Int. Cl.: H04L 5/00, H04W 64/00

(54) **INFORMATION CONFIGURATION METHOD AND APPARATUS, DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2021/121306
(87) International publication number: WO 2023/050060

(57) **Abstract**

The present disclosure relates to the field of mobile communications, and provides an information configuration method and apparatus, a device and a storage medium. The method comprises: receiving first configuration information, wherein the first con- 0tn figuration information indicates that the priority of a positioning reference signal is a target priority, and the positioning reference signal of the target priority is a positioning reference signal that a terminal does not need to perform measurement on the basis of a measurement gap; the terminal measuring the positioning reference signal, without being affected by the measurement gap or being configured by a network device, such that a measurement delay of the positioning reference signal is reduced, and the communication efficiency of the terminal is also improved.

## Description

### TECHNICAL FIELD

The present disclosure relates to a field of mobile communication, more particularly, to a method for configuring information, an apparatus, a device and a storage medium.

### BACKGROUND

In a mobile communication technology, a PRS (positioning reference signal) is newly defined, and positioning between a terminal and a network device is performed through the PRS.

The network device completes a PRS measurement by sending a measurement gap configuration to the terminal, and the terminal may perform the PRS measurement within a measurement gap according to the received measurement gap configuration, and then complete the positioning according to a measured PRS. However, after the network device sends the measurement gap configuration to the terminal, the terminal may perform the PRS measurement only within the measurement gap, and both a network device configuration process and the measurement gap will result in a large measurement delay of the PRS measurement.

### SUMMARY

Embodiments of the present disclosure provide a method for configuring information, an apparatus, a device and a storage medium. Measurement of a positioning reference signal by a terminal is not necessary to be affected by periodic occurrence of measurement gaps, and there is no need for a network device to configure the measurement gap, which reduces a measurement time delay for the positioning reference signal, and also improves a communication efficiency of the terminal. Technical solution is described as follows.

According to an aspect of the present disclosure, a method for configuring information is provided. The method is performed by a terminal device, and includes:
receiving first configuration information, in which, the first configuration information indicates that a priority of a positioning reference signal is a target priority, and a positioning reference signal with the target priority is a positioning reference signal that the terminal does not perform measurement based on a measurement gap.

According to an aspect of the present disclosure, a method for configuring information is provided. The method is performed by an access network device, and includes:
receiving resource request information;
in which, the resource request information includes suggestion configuration information of a positioning reference signal, the suggestion configuration information indicating that a priority of the positioning reference signal is a target priority, or, the resource request information includes first configuration information;
the first configuration information indicates that the priority of the positioning reference signal is the target priority, and the positioning reference signal with the target priority is a positioning reference signal that the terminal does not perform measurement based on a measurement gap.

According to an aspect of the present disclosure, a method for configuring information is provided. The method is performed by a location server, and includes:
sending first configuration information, in which, the first configuration information indicates that a priority of a positioning reference signal is a target priority, and a positioning reference signal with the target priority is a positioning reference signal that the terminal does not perform measurement based on a measurement gap.

According to an aspect of the present disclosure, an apparatus for configuring information is provided. The apparatus includes: a receiving module, configured to receive first configuration information, in which, the first configuration information indicates that a priority of a positioning reference signal is a target priority, and a positioning reference signal with the target priority is a positioning reference signal that the terminal does not perform measurement based on a measurement gap.

According to an aspect of the present disclosure, an apparatus for configuring information is provided. The apparatus includes:
a receiving module, configured to receive resource request information;
in which, the resource request information comprises suggestion configuration information of a positioning reference signal, the suggestion configuration information indicating that a priority of the positioning reference signal is a target priority, or, the resource request information comprises first configuration information;
the first configuration information indicates that the priority of the positioning reference signal is the target priority, and the positioning reference signal with the target priority is a positioning reference signal that the terminal does not perform measurement based on a measurement gap.

According to an aspect of the present disclosure, an apparatus for configuring information is provided. The apparatus includes:
a sending module, configured to send first configuration information, in which, the first configuration information indicates that a priority of a positioning reference signal is a target priority, and a positioning reference signal with the target priority is a positioning reference signal that the terminal does not perform measurement based on a measurement gap.

According to an aspect of the present disclosure, a terminal is provided. The terminal includes: a processor; a transceiver coupled to the processor; a memory configured to store executable instructions of the processor; in which, the processor is configured to load and execute the executable instructions to implement the method for configuring information as described in the above aspect.

According to an aspect of the present disclosure, an access network device is provided. The access network device includes: a processor; a transceiver coupled to the processor; a memory configured to store executable instructions of the processor; in which, the processor is configured to load and execute the executable instructions to implement the method for configuring information as described in the above aspect.

According to an aspect of the present disclosure, a location server is provided. The location server includes: a processor; a transceiver coupled to the processor; a memory configured to store executable instructions of the processor; in which, the processor is configured to load and execute the executable instructions to implement the method for configuring information as described in the above aspect.

According to an aspect of the present disclosure, a computer-readable storage medium is provided. The computer-readable storage medium has executable program codes stored thereon. The executable program codes are loaded and executed by a processor to implement the method for configuring information as described in the above aspect.

According to an aspect of the present disclosure, a chip is provided. The chip includes programmable logic circuits and/or program instructions. The chip is configured to implement the method for configuring information as described in the above aspect when running on a terminal, or an access network device, or a location server.

According to an aspect of the present disclosure, a computer program product is provided. The computer program product is configured to implement the method for configuring information as described in the above aspect when performed by a processor of a terminal, or an access network device, or a location server.

The technical solution provided in an embodiment of the present disclosure at least includes the following beneficial effects.

In the method, the apparatus, the device and the storage medium provided in embodiments of the present disclosure, the resource where the positioning reference signal is located is indicated by at least one reference included in the first configuration information, and then other devices determine the positioning reference signal with the priority being the target priority based on the first configuration information. The measurement of the positioning reference signal is not affected by periodic occurrence of the measurement gaps, and there is no need for a network device to configure the measurement gap, which reduces a measurement time delay for the positioning reference signal, and also improves a communication efficiency of the terminal.

### BRIEF DESCRIPTION OF THE DRAWINGS

In order to explain the technical solutions in embodiments of the present disclosure more clearly, the drawings described in the embodiments will be briefly introduced below. Obviously, the drawings described as below are only some embodiments of the present disclosure. Those skilled in the art may obtain other drawings from these drawings without creative work.
FIG. 1 is a block diagram illustrating a communication system provided in an exemplary embodiment of the present disclosure.
FIG. 2 is a flowchart illustrating a method for configuring information provided in an exemplary embodiment of the present disclosure.
FIG. 3 is a flowchart illustrating a method for configuring information provided in an exemplary embodiment of the present disclosure.
FIG. 4 is a flowchart illustrating a method for configuring information provided in an exemplary embodiment of the present disclosure.
FIG. 5 is a flowchart illustrating a method for configuring information provided in an exemplary embodiment of the present disclosure.
FIG. 6 is a flowchart illustrating a method for configuring information provided in an exemplary embodiment of the present disclosure.
FIG. 7 is a flowchart illustrating a method for configuring information provided in an exemplary embodiment of the present disclosure.

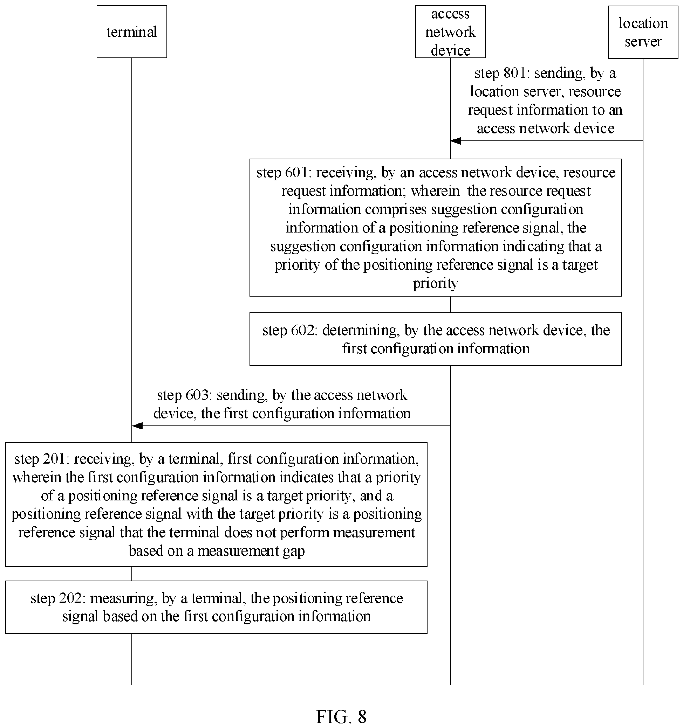

FIG. 8 is a flowchart illustrating a method for configuring information provided in an exemplary embodiment of the present disclosure.
FIG. 9 is a flowchart illustrating a method for configuring information provided in an exemplary embodiment of the present disclosure.
FIG. 10 is a flowchart illustrating a method for configuring information provided in an exemplary embodiment of the present disclosure.
FIG. 11 is a block diagram illustrating an apparatus for configuring information provided in an exemplary embodiment of the present disclosure.
FIG. 12 is a block diagram illustrating an apparatus for configuring information provided in an exemplary embodiment of the present disclosure.
FIG. 13 is a block diagram illustrating an apparatus for configuring information provided in an exemplary embodiment of the present disclosure.
FIG. 14 is a block diagram illustrating an apparatus for configuring information provided in an exemplary embodiment of the present disclosure.
FIG. 15 is a block diagram illustrating an apparatus for configuring information provided in an exemplary embodiment of the present disclosure.
FIG. 16 is a block diagram illustrating an apparatus for configuring information provided in an exemplary embodiment of the present disclosure.
FIG. 17 is a diagram illustrating a structure of a communication device according to an exemplary embodiment of the present disclosure.

### DETAILED DESCRIPTION

In order to make the purpose, technical solutions and advantages of the present disclosure more clear, the embodiments of the present disclosure will be further described below in connection with accompanying drawings.

The example embodiments will be described, and examples thereof are shown in the accompanying drawings. When the following descriptions refer to the accompanying drawings, same numbers in different drawings represent same or similar elements unless otherwise indicated. The implementations described in the following exemplary embodiments do not represent all implementations consistent with embodiments of the present disclosure. Rather, they are merely examples of apparatuses and methods consistent with some aspects of the disclosure as detailed in the appended claims.

The terms described in the present disclosure are only for the purpose of describing specific embodiments and are not intended to limit the present disclosure. The singular forms "a", "the" and "said" used in the disclosure and the attached claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in this disclosure to describe various information, such information shall not be limited to these terms. These terms are only used to distinguish the same category of information. For example, subject to the scope of this present disclosure, first information may also be referred to as second information, and similarly, and second information may also be referred to as first information. It depends on the context. For example, the word "if' as used herein may be interpreted as "in a case that" or "when" or "in response to determining".

Application scenarios of the present disclosure are described below.

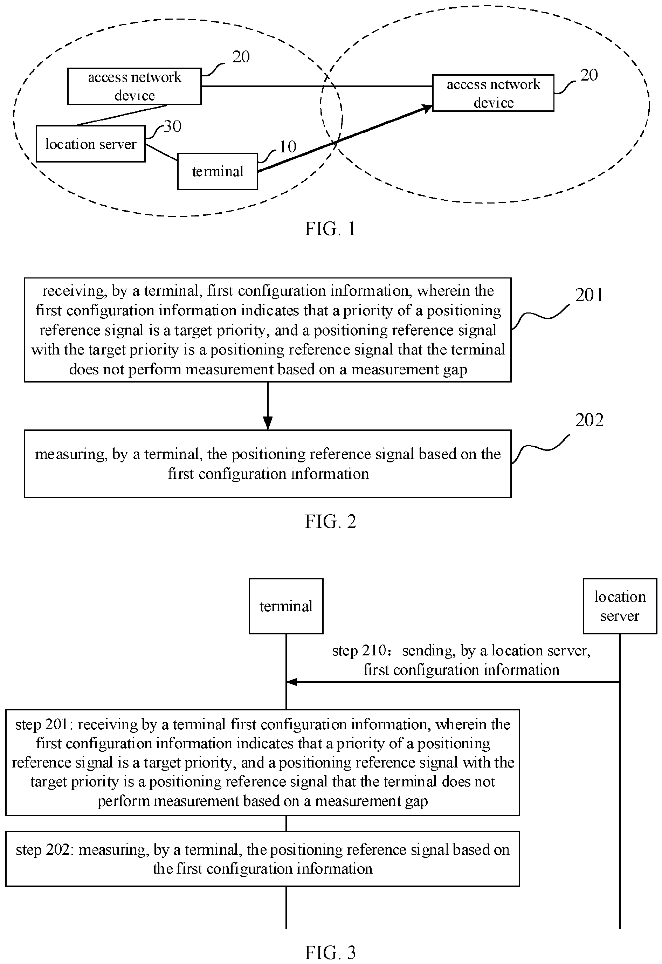

FIG. 1 is a block diagram illustrating a communication system provided in an exemplary embodiment of the present disclosure. The communication system may include: a terminal 10, an access network device 20 and a location server 30.

A number of the terminals 10 is generally more than one. One or more terminals 10 may be distributed in a cell managed by each network device 20. The terminal 10 may include various handheld devices, vehicle-mounted devices, wearable devices, computing devices with wireless communication functions, or other processing devices connected to a wireless modem, as well as various forms of user equipment (UE), mobile stations (MSs), etc. For convenience of description, in an embodiment of the present disclosure, the above-mentioned devices are collectively referred to as the terminal.

The access network device 20 is a device deployed in an access network to provide a wireless communication function for the terminal 10. The access network device 20 may include various forms of macro base stations, micro base stations, relay stations, access points, etc. In systems using different wireless access technologies, names of devices with an access network device function may be different. For example, in a 5G NR system, the device with the access network device function is called gNodeB or gNB. With evolution of communication technology, the name "access network device" may change. For convenience of description, in an embodiment of the present disclosure, the above-mentioned devices that provide the wireless communication function for the terminal 10 are collectively referred to as the access network device. A connection between the access network device 20 and the terminal 10 may be established through an air interface, so as to perform communication through the connection, including signaling and data interaction. A number of access network devices 20 may be generally more than one, and communication between two adjacent access network devices 20 may also performed in a wired or wireless manner. The terminal 10 can switch between different access network devices 20, that is, establish connections with different access network devices 20.

The location server 30 is a location management function network element. Optionally, the location management function network element includes a location server, and the location server can be implemented as any of an LMF (location management network element), an E-SMLC (enhanced serving mobile location center), an SUPL (secure user plane location), an SUPL SLP (SUPL location platform). In a wireless access technology system, the location server is connected to the terminal 10 and the access network device 20 respectively, and then can communicate with the terminal 10 and the access network device 20 respectively. The location server can locate the terminal 10, and then acquire a location of the terminal 10. The location server 30 locates the terminal 10 by sending configuration information of PRS (positioning reference signal) or SRS (sounding reference signal). The PRS is sent by at least one TRP (transmission reception point), and the terminal measures the PRS. The SRS is sent by the terminal, and at least one TRP measures the SRS.

The "5G NR system" in embodiments of the present disclosure may also be referred to as a 5G system or an NR system, but those skilled in the art can understand its meaning. The technical solution described in embodiments of the present disclosure may be applicable for the 5G NR system, and may also be applicable for a subsequent evolution system of the 5G NR system.

FIG. 2 is a flowchart illustrating a method for configuring information provided in an exemplary embodiment of the present disclosure. The method is applied to a terminal, an access network device, and a location server as illustrated in FIG. 1, and the method includes at least part of the following contents.

At step 201, the terminal receives first configuration information, in which, the first configuration information indicates that a priority of a positioning reference signal is a target priority, and a positioning reference signal with the target priority is a positioning reference signal that the terminal does not perform measurement based on a measurement gap.

In an embodiment of the present disclosure, after receiving the first configuration information, the terminal can determine the positioning reference signal whose priority is the target priority, and determine that these positioning reference signals can be measured without being based on the measurement gap based on the target priority.

In some embodiments, the priority corresponding to the positioning reference signal is the target priority.

For example, the priority of the positioning reference signal is represented by 0 or 1. In response to the priority of the positioning reference signal being 0, it indicates that the priority is not the target priority. In response to the priority of the positioning reference signal being 1, it indicates that the priority is the target priority.

In some other embodiments, the positioning reference signal corresponds to a priority, and in response to the priority of the positioning reference signal being less than a preset threshold, it is determined that the priority corresponding to the positioning reference signal is the target priority.

The preset threshold is set by the terminal, or set by the access network device or the location server, or agreed by an agreement, or set in other ways, which is not limited in embodiments of the present disclosure. The preset threshold is 1, 2, 3 or other numerical values.

For example, in response to the preset threshold being 5, it is determined that the priority corresponding to the positioning reference signal is the target priority when the priority corresponding to the positioning reference signal is 3, and it is determined that the priority corresponding to the positioning reference signal is not the target priority when the priority corresponding to the positioning reference signal is 6.

At step 202, The terminal measures the positioning reference signal according to the first configuration information.

In an embodiment of the present disclosure, the terminal determines the positioning reference signal with the target priority indicated by the first configuration information, and then may measure the positioning reference signal to obtain a measurement result of the positioning reference signal by measurement.

In the method provided by an embodiment of the present disclosure, the terminal receives the first configuration information, and the first configuration information indicates the positioning reference signal that is not required to be measured based on the measurement gap. Therefore, the measurement of the positioning reference signal is not required to be affected by periodic occurrence of the measurement gaps, and there is no need for a network device to configure the measurement gap, which reduces a measurement time delay for the positioning reference signal, and also improves a communication efficiency of the terminal.

On the basis of an embodiment illustrated in FIG. 2, the first configuration information includes at least one parameter.

In some embodiments, the first configuration information includes at least one of the following.
(1) A set identifier of a positioning reference signal set, in which, the positioning reference signal set includes at least one positioning reference signal resource.

The positioning reference signal resource is configured to transmit the positioning reference signal, and the set identifier indicates the corresponding positioning reference signal set.

In an embodiment of the present disclosure, each positioning reference signal belongs to a certain positioning reference signal set. In response to the first configuration information including the set identifier of the positioning reference signal set, the corresponding positioning reference signal set can be determined according to the set identifier, and then at least one positioning reference signal resource included in the positioning reference signal set can be determined.

(2) A resource identifier of the positioning reference signal resource.

The resource identifier indicates a resource where the positioning reference signal is located. Any positioning reference signal is required to be transmitted through the resource. In response to the first configuration information including the resource identifier, the corresponding positioning reference signal resource can be determined according to the resource identifier, and the positioning reference signal is transmitted based on the determined positioning reference signal resource.

(3) A time domain position occupied by the positioning reference signal.

(4) A frequency domain position occupied by the positioning reference signal.

(5) A sequence identifier of the positioning reference signal.

The sequence identifier indicates a sequence of the positioning reference signal. Any positioning reference signal has one sequence. In response to the first configuration information including the sequence identifier, the sequence of the positioning reference signal can be determined according to the sequence identifier.

In an embodiment of the present disclosure, the resource where the positioning reference signal is located is indicated through at least one parameter included in the first configuration information, and the terminal determines the positioning reference signal with the priority being the target priority based on the first configuration information. Therefore, the measurement of the positioning reference signal is not required to be affected by periodic occurrence of the measurement gaps, and there is no need for a network device to configure the measurement gap, which reduces a measurement time delay for the positioning reference signal, and also improves a communication efficiency of the terminal.

In some other embodiments, the first configuration information further includes any of the following.

A first type: the positioning reference signal is sent periodically.

A second type: the positioning reference signal is sent aperiodically.

A third type: the positioning reference signal is sent semi-persistently.

In an embodiment of the present disclosure, the first configuration information includes a transmission mode of the positioning reference signal, and the transmission mode of the positioning reference signal can be determined based on the first configuration signal.

In some embodiments, the first configuration information includes a transmission mode identifier of the transmission mode. For example, in response to the transmission mode identifier being 1, it indicates that the positioning reference signal is sent periodically. In response to the transmission mode identifier being 2, it indicates that the positioning reference signal is sent aperiodically. In response to the transmission mode identifier being 3, it indicates that the positioning reference signal is sent semi-persistently.

Based on an embodiment illustrated in FIG. 2, the first configuration information may be sent by different devices. The first configuration information may be sent by a location server, or sent by an access network device.

In some embodiments, the first configuration information is sent by the location server, specific steps of which may refer to FIG. 3.

At step 210, the location server sends the first configuration information.

In an embodiment of the present disclosure, the location server directly determines the positioning reference signal with the priority being the target priority, determines the first configuration information based on the positioning reference signal and the resource where the positioning reference signal is located, and then sends the first configuration information.

The location server not only sends the first configuration information to the terminal, but also sends the first configuration information to the access network device (such as a gNB where a serving cell of the terminal is located).

After the location server sends the first configuration information, both the terminal and the access network device can determine the positioning reference signal with the priority being the target priority according to the first configuration information, and then both the terminal and the access network device can determine the positioning reference signal with the target priority according to the first configuration information, without measuring based on the measurement gap.

In the method provided by an embodiment of the present disclosure, the location server directly requests to determine the positioning reference signal resource for transmitting the positioning reference signal, and determines the first configuration information based on the determined positioning reference signal resource, to indicate that the terminal is not required to be affected by periodic occurrence of the measurement gap, and there is no need for a network device to configure the measurement gap, which reduces a measurement time delay for the positioning reference signal, and also improves a communication efficiency of the terminal.

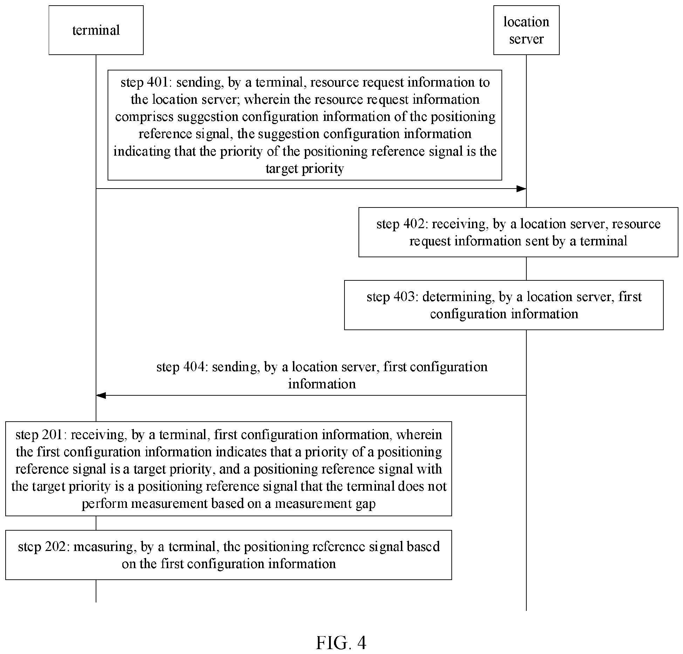

It should be noted that an embodiment of the present disclosure is described only by taking the location server directly sending the first configuration information to the terminal as an example. In another embodiment, it is required to send resource request information by the terminal, causing that the location server can determine and send the first configuration information, specific steps of which may refer to FIG. 4.

At step 401, the terminal sends resource request information to the location server. The resource request information includes suggestion configuration information of the positioning reference signal, and the suggestion configuration information indicates that the priority of the positioning reference signal is the target priority.

The suggestion configuration information indicates the positioning reference signal, that is determined by the terminal itself, with the priority being the target priority.

In some embodiments, the suggestion configuration information includes at least one of:
(1) a set identifier of a positioning reference signal set, in which the positioning reference signal set includes at least one positioning reference signal resource;
(2) a resource identifier of the positioning reference signal resource;
(3) a time domain position occupied by the positioning reference signal;
(4) a frequency domain position occupied by the positioning reference signal; or
(5) a sequence identifier of the positioning reference signal.

The suggestion configuration information is similar to the above-mentioned first configuration information, which will not be repeated herein.

In some embodiments, the resource request information is carried on any one of a physical random access channel (PRACH), a scheduling request (SR), a physical uplink control channel (PUCCH), and a physical uplink shared channel (PUSCH).

At step 402, the location server receives the resource request information sent by the terminal.

At step 403, the location server determines the first configuration information.

In an embodiment of the present disclosure, the terminal sends the resource request information including the suggestion configuration information to the location server, and the location server may receive the resource request information. After receiving the suggestion configuration information sent by the terminal, the location server can determine the first configuration information according to the suggestion configuration information. The first configuration information may indicate a positioning reference signal that is not required to be measured based on a measurement gap.

In some embodiments, the location server directly determines the suggestion configuration information as the first configuration information.

In some other embodiments, the location server first determines positioning reference signals indicated by the suggestion configuration information according to the suggestion configuration information, and then determines the positioning reference signal with the priority being the target priority from these positioning reference signals, and further determines the first configuration information based on the positioning reference signal with the target priority.

For example, in response to the positioning reference signals indicated by the suggestion configuration information including positioning reference signals with lower priorities than other signals, these positioning reference signals are excluded, and the first configuration information is determined based on the remaining positioning reference signals.

Step 404: the location server sends the first configuration information.

In an embodiment of the present disclosure, the location server can send the first configuration information after determining the first configuration information.

The location server not only sends the first configuration information to the terminal, but also sends the first configuration information to the access network device. Both the terminal and the access network device may determine the positioning reference signal with the priority being the target priority after receiving the first configuration information.

In the method provided by an embodiment of the present disclosure, the location server determines the first configuration information according to the suggestion configuration information sent by the terminal, which improves an accuracy of the determined first configuration information.

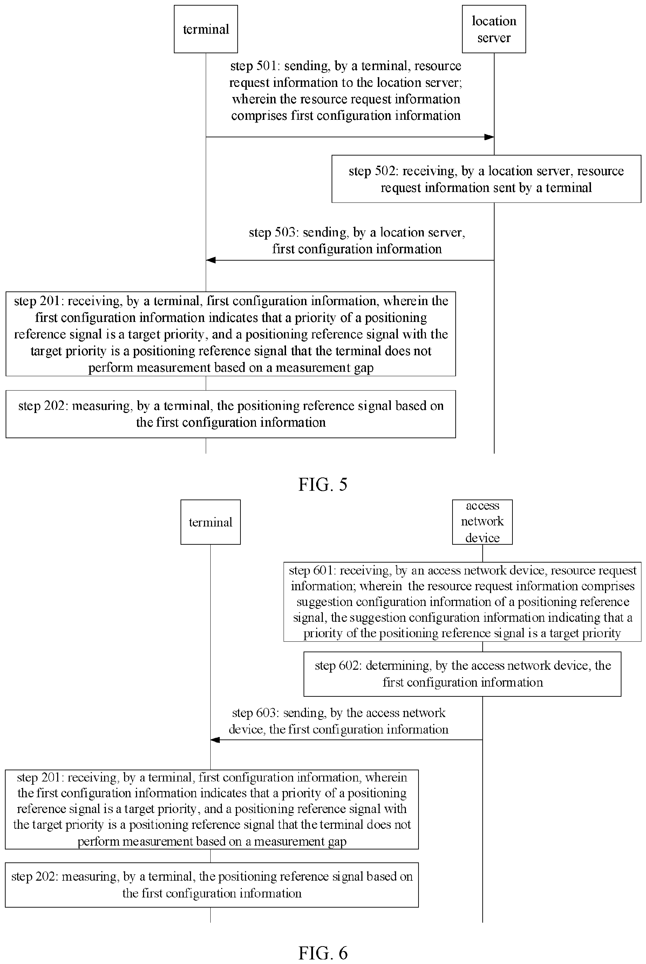

The above embodiment illustrated in FIG. 4 describes that the terminal sends resource request information including suggestion configuration information. In another embodiment, the terminal may further send resource request information including first configuration information, details of which may refer to an embodiment illustrated in FIG. 5.

At step 501, the terminal sends the resource request information to the location server, and the resource request information includes the first configuration information.

At step 502, the location server receives the resource request information sent by the terminal.

At step 503, the location server sends the first configuration information.

In an embodiment of the present disclosure, the terminal sends the resource request information including the first configuration information to the location server, and the location server directly obtains the first configuration information in the resource request information, and may send the first configuration information without processing the first configuration information.

The location server not only sends the first configuration information to the terminal, but also needs to send the first configuration information to the network device.

In the method provided by an embodiment of the present disclosure, after the terminal sends the resource request information including the first configuration information, the location server directly sends the first configuration information included in the resource request information after receiving the resource request information, without requiring the location server to process the first configuration information. Therefore, signaling overhead is reduced and a transmission efficiency is improved.

In some embodiments, the first configuration information is sent by the access network device, specific steps of which may refer to FIG. 6.

At step 601, the access network device receives resource request information. The resource request information includes suggestion configuration information of the positioning reference signal, and the suggestion configuration information indicates that the priority of the positioning reference signal is the target priority.

The suggestion configuration information included in the resource request information is referred to by the access network device, causing the access network device to determine the positioning reference signal with the target priority according to the suggestion configuration information.

At step 602: the access network device determines the first configuration information.

In some embodiments, the access network device directly determines the suggestion configuration information as the first configuration information.

In some other embodiments, the access network device first determines the positioning reference signals indicated by the suggestion configuration information according to the suggestion configuration information, and then determines the positioning reference signal with a priority being the target priority from these positioning reference signals, and further determines the first configuration information based on the positioning reference signal with the target priority.

For example, in response to the positioning reference signals indicated by the suggestion configuration information including positioning reference signals with lower priorities than other signals, these positioning reference signals are excluded, and the first configuration information is determined based on the remaining positioning reference signals.

It should be noted that an embodiment of the present disclosure uses step 602 only as an example for illustration. In another embodiment, the method may not perform step 602, the access network device determines the first configuration information in other ways, and then perform step 603.

At step 603: the access network device sends the first configuration information.

In an embodiment of the present disclosure, after the access network device determines the first configuration information, it can send the first configuration information.

The access network device not only sends the first configuration information to the terminal, but also sends the first configuration information to a location server. After receiving the first configuration information, both the terminal and the location server may determine the positioning reference signal with the priority being the target priority.

In some embodiments, the first configuration information is carried on any one of a RRC (radio resource control), an MAC CE (medium access control control element) and a DCI (downlink control information).

In the method provided by an embodiment of the present disclosure, the access network device determines the first configuration information according to the received suggestion configuration information, which improves an accuracy of the determined first configuration information.

On the basis of an embodiment illustrated in FIG. 6, resource request information received by an access network device is sent by a terminal, or sent by a location server.

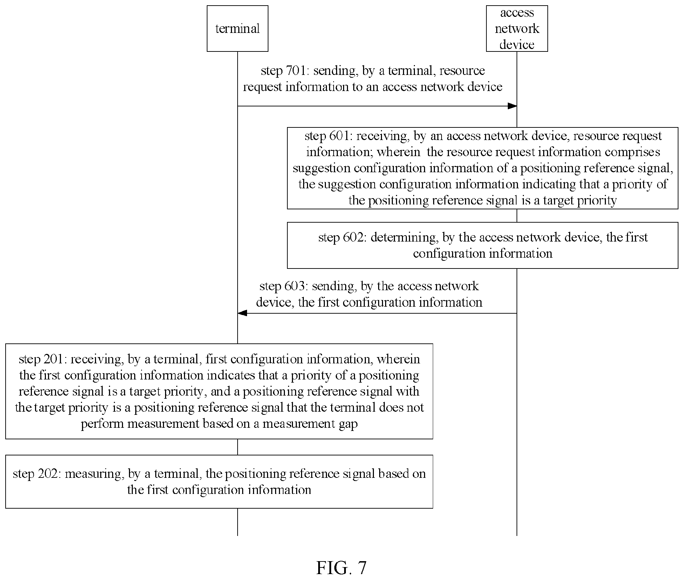

For example, in response to the resource request information being sent by the terminal, specific steps of which may refer to FIG. 7.

At step 701: the terminal sends the resource request information to the access network device.

In an embodiment of the present disclosure, the terminal sends the resource request information to the access network device, and the resource request information includes suggestion configuration information.

The suggestion configuration information indicates the positioning reference signal, that is determined by the terminal itself, with the priority being the target priority.

In some embodiments, the resource request information is carried on any one of a physical random access channel (PRACH), a scheduling request (SR), a physical uplink control channel (PUCCH), and a physical uplink shared channel (PUSCH).

For another example, in response to the resource request information being sent by the location server, specific steps of which may refer to FIG. 78.

At step 801: the location server sends the resource request information to the access network device.

In an embodiment of the present disclosure, the location server sends the resource request information to the access network device, and the resource request information includes the suggestion configuration information.

The suggestion configuration information indicates the positioning reference signal, that is determined by the location server itself, with the priority being the target priority.

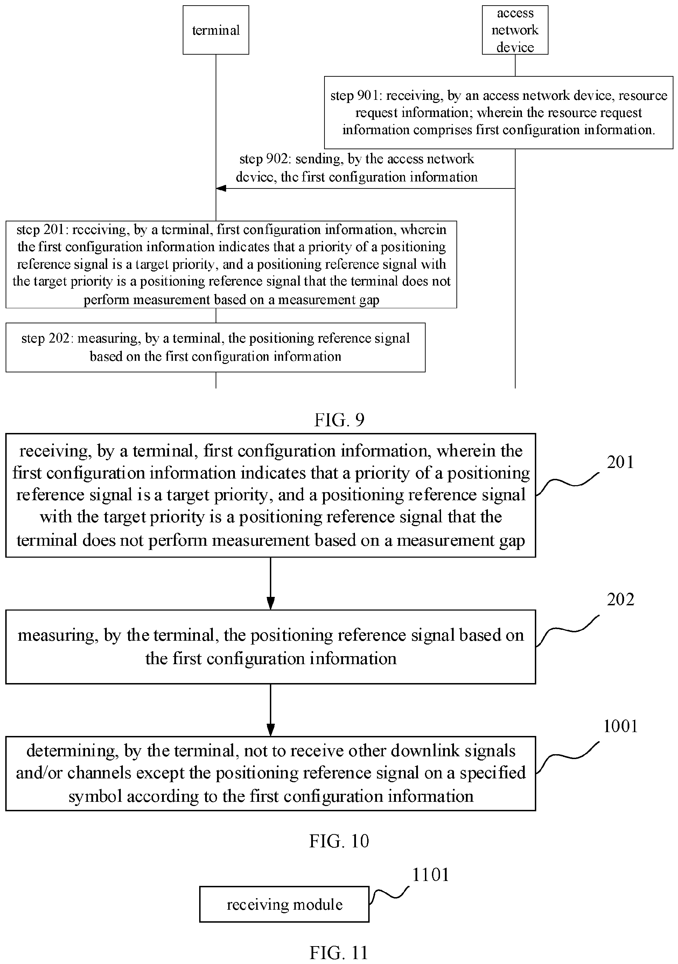

An embodiment illustrated in FIG. 6 illustrates that the resource request information received by the access network device is the suggestion configuration information, but in another embodiment, the resource request information received by the access network device is first configuration information, specific steps of which may refer to FIG. 9.

At step 901, the access network device receives the resource request information. The resource request information includes the first configuration information.

It should be noted that the resource request information in an embodiment of the present disclosure is sent by the terminal or by the location server, which is not limited in an embodiment of the present disclosure.

At step 902, the access network device sends the first configuration information.

In an embodiment of the present disclosure, the resource request information includes the first configuration information. After receiving the resource request information, the access network device may directly send the first configuration information without processing the first configuration information included in the resource request information.

The access network device not only sends the first configuration information to the terminal, but also sends the first configuration information to the location server.

In the method provided by an embodiment of the present disclosure, the access network device directly sends the first configuration information included in the resource request information, without processing the first configuration information, which reduces signaling overhead and improves a transmission efficiency.

On the basis of an embodiment illustrated in FIG. 2, the terminal will not receive other signals except the positioning reference signal, a specific step of which may refer to thane embodiment illustrated in FIG. 10.

At step 1001, the terminal determines, based on the first configuration information, that receiving no other downlink signals and/or channels except for the positioning reference signal on a specified symbol is performed.

The specified symbol includes at least one of:
(1) a symbol occupied by the positioning reference signal;
(2) X symbols located before the symbol occupied by the positioning reference signal and adjacent to the symbol occupied by the positioning reference signal, where X is a positive integer;
(3) Y symbols located after the symbol occupied by the positioning reference signal and adjacent to the symbol occupied by the positioning reference signal, where Y is a positive integer; or
(4) a symbol located in a specified window configured for processing the positioning reference signal and comprising the symbol occupied by the positioning reference signal.

In some embodiments, the downlink signal and/or channel includes at least one:
a PBCH (physical broadcast channel);
a PDCCH (physical downlink control channel);
a PDSCH (physical downlink shared channel);
an SSB (synchronization signal block);
a CSI-RS (channel state information reference signal); or
a DMRS (demodulation reference signal).

It should be noted that an embodiment of the present disclosure is described only by taking the terminal not receiving other downlink signals and/or channels except the positioning reference signal as an example. In another embodiment, in a case that the terminal does not have a capability of simultaneously receiving the positioning reference signal and other signals and/or channels, the terminal does not receive other downlink signals and/or channels except the positioning reference signal. In response to the terminal having the capability of simultaneously receiving the positioning reference signals and other signals and/or channels, the terminal may receive other downlink signals and/or channels other than the positioning reference signal while the receiving positioning reference signal without performing step 1001.

It should be noted that the above embodiments can be combined with each other, and the present disclosure does not limit a combination manner between respective embodiments.

FIG. 11 is a block diagram illustrating an apparatus for configuring information provided in an exemplary embodiment of the present disclosure. Referring to FIG. 11, the apparatus includes:
a receiving module 1101, configured to receive first configuration information, in which, the first configuration information indicates that a priority of a positioning reference signal is a target priority, and a positioning reference signal with the target priority is a positioning reference signal that the terminal does not perform measurement based on a measurement gap.

In some embodiments, the first configuration information includes at least one of:
a set identifier of a positioning reference signal set, in which, the positioning reference signal set includes at least one positioning reference signal resource;
a resource identifier of the positioning reference signal resource;
a time domain position occupied by the positioning reference signal;
a frequency domain position occupied by the positioning reference signal; or
a sequence identifier of the positioning reference signal.

In some embodiments, the first configuration information includes any of:
the positioning reference signal being sent periodically;
   or,
the positioning reference signal being sent aperiodically;
   or,
the positioning reference signal being sent semi-persistently.

In some embodiments, the first configuration information is sent by a location server;
or,
the first configuration information is sent by an access network device.

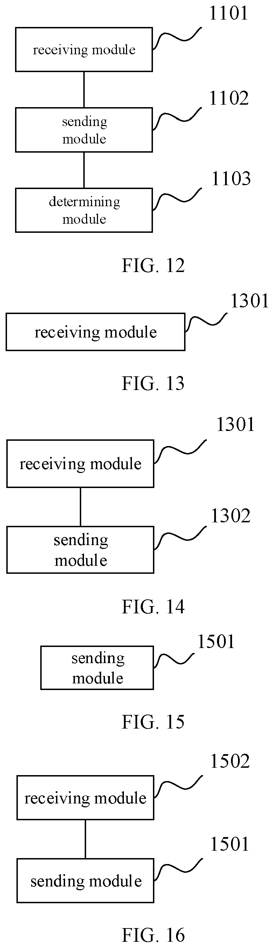

In some embodiments, referring to FIG. 12, the apparatus further includes:
a sending module 1102, configured to send resource request information to the location server;
in which, the resource request information includes suggestion configuration information of the positioning reference signal, the suggestion configuration information indicating that the priority of the positioning reference signal is the target priority, or, the resource request information includes the first configuration information.

In some embodiments, referring to FIG. 12, the apparatus further includes:
a sending module 1102, configured to send resource request information to the access network device, in which, the resource request information includes suggestion configuration information of the positioning reference signal, and the suggestion configuration information indicates that the priority of the positioning reference signal is the target priority, or, the resource request information includes the first configuration information.

In some embodiments, the resource request information is carried on any one of a physical random access channel (PRACH), a scheduling request (SR), a physical uplink control channel (PUCCH), and a physical uplink shared channel (PUSCH).

In some embodiments, referring to FIG. 12, the apparatus further includes:
a determining module 1103, configured to determine, based on the first configuration information, that receiving no other downlink signals and/or channels except for the positioning reference signal on a specified symbol is performed.

The specified symbol comprises at least one of:
a symbol occupied by the positioning reference signal;
X symbols located before the symbol occupied by the positioning reference signal and adjacent to the symbol occupied by the positioning reference signal;
Y symbols located after the symbol occupied by the positioning reference signal and adjacent to the symbol occupied by the positioning reference signal, where X and Y are positive integers; or
a symbol located in a specified window configured for processing the positioning reference signal and comprising the symbol occupied by the positioning reference signal.

In some embodiments, the downlink signal and/or channel includes at least one of:
a PBCH;
aPDCCH;
a PDSCH;
an SSB;
a CSI-RS; or
a DMRS.

FIG. 13 is a block diagram illustrating an apparatus for configuring information provided in an exemplary embodiment of the present disclosure. Referring to FIG. 13, the apparatus includes:
a receiving module 1301, configured to receive resource request information.

The resource request information includes suggestion configuration information of a positioning reference signal, the suggestion configuration information indicating that a priority of the positioning reference signal is a target priority, or, the resource request information includes first configuration information.

The first configuration information indicates that the priority of the positioning reference signal is the target priority, and the positioning reference signal with the target priority is a positioning reference signal that the terminal does not perform measurement based on a measurement gap.

In some embodiments, the resource request information is sent by a terminal; or, the resource request information is sent by a location server.

In some embodiments, referring to FIG. 14, the apparatus further includes:
a sending module 1302, configured to send the first configuration information.

In some embodiments, the first configuration information includes at least one of:
a set identifier of a positioning reference signal set, in which, the positioning reference signal set includes at least one positioning reference signal resource;
a resource identifier of the positioning reference signal resource;
a time domain position occupied by the positioning reference signal;
a frequency domain position occupied by the positioning reference signal; or
a sequence identifier of the positioning reference signal.

In some embodiments, the first configuration information includes any of:
the positioning reference signal being sent periodically;
   or,
the positioning reference signal being sent aperiodically;
   or,
the positioning reference signal being sent semi-persistently.

In some embodiments, the resource request information is carried on any one of a PRACH, an SR, a PUCCH, and a PUSCH.

FIG. 15 is a block diagram illustrating an apparatus for configuring information provided in an exemplary embodiment of the present disclosure. Referring to FIG. 15, the apparatus includes:
a sending module 1501, configured to send first configuration information, in which, the first configuration information indicates that a priority of a positioning reference signal is a target priority, and a positioning reference signal with the target priority is a positioning reference signal that the terminal does not perform measurement based on a measurement gap.

In some embodiments, the first configuration information includes at least one of:
a set identifier of a positioning reference signal set, wherein the positioning reference signal set comprises at least one positioning reference signal resource;
a resource identifier of the positioning reference signal resource;
a time domain position occupied by the positioning reference signal;
a frequency domain position occupied by the positioning reference signal; or
a sequence identifier of a sequence to which the positioning reference signal belongs.

In some embodiments, the first configuration information includes any one of:
the positioning reference signal being sent periodically;
   or,
the positioning reference signal being sent aperiodically;
   or,
the positioning reference signal being sent semi-persistently.

In some embodiments, referring to FIG. 16, the apparatus further includes:
a receiving module 1502, configured to receive resource request information sent by a terminal.

The resource request information includes suggestion configuration information of the positioning reference signal, the suggestion configuration information indicating that the priority of the positioning reference signal is the target priority, or, the resource request information includes the first configuration information.

In some embodiments, referring to FIG. 16, the apparatus further includes:
a sending module 1501, configured to send resource request information to an access network device, in which, the resource request information includes suggestion configuration information of the positioning reference signal, and the suggestion configuration information indicates that the priority of the positioning reference signal is the target priority;
the receiving module 1502 being configured to receive the first configuration information sent by the access network device

In some embodiments, the apparatus further includes:
a sending module 1501, configured to send resource request information to an access network device, in which, the resource request information includes the first configuration information.

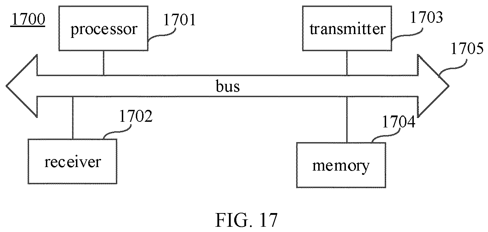

FIG. 17 is a diagram illustrating a structure of a communication device according to an exemplary embodiment of the present disclosure. The communication device includes a processor 1701, a receiver 1702, a transmitter 1703, a memory 1704 and a bus 1705.

The processor 1701 includes one or more processing cores. The processor 1701 executes various function applications and information processings by running a software program or a module.

The receiver 1702 and the transmitter 1703 may be implemented as a communication component, which may be a communication chip.

The memory 1704 is communicatively connected to the processor 1701 via the bus 1705.

The memory 1704 may be configured to store at least one program code, and the processor 1701 is configured to execute the at least one program code to implement respective steps in the above method embodiment.

In addition, the communication device may be a terminal or a network device. The memory 1704 may be implemented by any type of volatile or non-volatile storage devices or their combination. The volatile or non-volatile storage device includes, but is not limited to, a magnetic disk or an optical disk, an electrically-erasable programmable read only memory (EEPROM), an erasable programmable read-only memory (EPROM), a static random access memory (SRAM), a read-only memory (ROM), a magnetic memory, a flash memory and a programmable read-only memory (PROM).

In an exemplary embodiment, the present disclosure also provides a computer-readable storage medium. The readable storage medium has executable program codes stored thereon is provided. When the executable program codes are loaded and executed by a processor, the method for configuring information executed by a communication device in the above respective method embodiments is implemented.

In an exemplary embodiment, the present disclosure also provides a chip. The chip includes programmable logic circuits and/or program instructions, and is configured to implement the method for configuring information as described in the above respective method embodiments when running on a terminal or an access network device or a location server.

In an exemplary embodiment, the present disclosure also provides a computer program product. The computer program product is configured to implement the method for configuring information as described in the above respective method embodiments when executed by a processor of a terminal or an access network device or a location server.

Those skilled in the art can understand that implementations of all or part of the steps of the above embodiments can be completed by hardware, or by instructing relevant hardware through programs. The programs can be stored in a computer-readable storage medium, which can be a read-only memory, a magnetic disk, or an optical disk, etc.

The above embodiments are only optional embodiments of the present disclosure and are not intended to limit the present disclosure. Any modifications, equivalent substitutions, improvements, etc. made within the spirit and principles of the present disclosure should be included in the scope of protection of the present disclosure.

## Claims

1. A method for configuring information, performed by a terminal, comprising:
receiving first configuration information, wherein the first configuration information indicates that a priority of a positioning reference signal is a target priority, and a positioning reference signal with the target priority is a positioning reference signal that the terminal does not perform measurement based on a measurement gap.

2. The method according to claim 1, wherein the first configuration information comprises at least one of:
a set identifier of a positioning reference signal set, wherein the positioning reference signal set comprises at least one positioning reference signal resource;
a resource identifier of the positioning reference signal resource;
a time domain position occupied by the positioning reference signal;
a frequency domain position occupied by the positioning reference signal; or
a sequence identifier of the positioning reference signal.

3. The method according to claim 1 or 2, wherein the first configuration information comprises any one of:
the positioning reference signal being sent periodically;
or,
the positioning reference signal being sent aperiodically;
or,
the positioning reference signal being sent semi-persistently.

4. The method according to any one of claims 1 to 3, wherein
the first configuration information is sent by a location server;
or,
the first configuration information is sent by an access network device.

5. The method according to claim 4, further comprising:
sending resource request information to the location server;
wherein the resource request information comprises suggestion configuration information of the positioning reference signal, the suggestion configuration information indicating that the priority of the positioning reference signal is the target priority, or, the resource request information comprises the first configuration information.

6. The method according to claim 4, further comprising:
sending resource request information to the access network device, wherein the resource request information comprises suggestion configuration information of the positioning reference signal, and the suggestion configuration information indicating that the priority of the positioning reference signal is the target priority, or, the resource request information comprises the first configuration information.

7. The method according to claim 5 or 6, wherein the resource request information is carried on any one of a physical random access channel (PRACH), a scheduling request (SR), a physical uplink control channel (PUCCH), and a physical uplink shared channel (PUSCH).

8. The method according to any one of claims 1 to 7, further comprising:
based on the first configuration information, determining that receiving no other downlink signals and/or channels except for the positioning reference signal on a specified symbol is performed;
wherein the specified symbol comprises at least one of:
a symbol occupied by the positioning reference signal;
X symbols located before the symbol occupied by the positioning reference signal and adjacent to the symbol occupied by the positioning reference signal;
Y symbols located after the symbol occupied by the positioning reference signal and adjacent to the symbol occupied by the positioning reference signal, where X and Y are positive integers; or
a symbol located in a specified window configured for processing the positioning reference signal and comprising the symbol occupied by the positioning reference signal.

9. The method according to claim 8, wherein the downlink signal and/or channel comprises at least one of:
a physical broadcast channel (PBCH);
a physical downlink control channel (PDCCH);
a physical downlink shared channel (PDSCH);
a synchronization resource block (SSB);
a channel state information reference signal (CSI-RS); or
a demodulation reference signal (DMRS).

10. A method for configuring information, performed by an access network device, comprising:
receiving resource request information;
wherein the resource request information comprises suggestion configuration information of a positioning reference signal, the suggestion configuration information indicating that a priority of the positioning reference signal is a target priority, or, the resource request information comprises first configuration information;
the first configuration information indicates that the priority of the positioning reference signal is the target priority, and the positioning reference signal with the target priority is a positioning reference signal that the terminal does not perform measurement based on a measurement gap.

11. The method according to claim 10, wherein the resource request information is sent by a terminal; or, wherein the resource request information is sent by a location server.

12. The method according to claim 10 or 11, further comprising:
sending the first configuration information.

13. The method according to any one of claims 10 to 12, wherein the first configuration information comprises at least one of:
a set identifier of a positioning reference signal set, wherein the positioning reference signal set comprises at least one positioning reference signal resource;
a resource identifier of the positioning reference signal resource;
a time domain position occupied by the positioning reference signal;
a frequency domain position occupied by the positioning reference signal; or
a sequence identifier of the positioning reference signal.

14. The method according to any one of claims 10 to 13, wherein the first configuration information comprises any one of:
the positioning reference signal being sent periodically;
or,
the positioning reference signal being sent aperiodically;
or,
the positioning reference signal being sent semi-persistently.

15. The method according to any one of claims 10 to 14, wherein the resource request information is carried on any one of a physical random access channel (PRACH), a scheduling request (SR), a physical uplink control channel (PUCCH), and a physical uplink shared channel (PUSCH).

16. A method for configuring information, performed by a location server, comprising:
sending first configuration information, wherein the first configuration information indicates that a priority of a positioning reference signal is a target priority, and a positioning reference signal with the target priority is a positioning reference signal that the terminal does not perform measurement based on a measurement gap.

17. The method according to claim 16, wherein the first configuration information comprises at least one of:
a set identifier of a positioning reference signal set, wherein the positioning reference signal set comprises at least one positioning reference signal resource;
a resource identifier of the positioning reference signal resource;
a time domain position occupied by the positioning reference signal;
a frequency domain position occupied by the positioning reference signal; or
a sequence identifier of the positioning reference signal.

18. The method according to claim 16 or 17, wherein the first configuration information comprises any one of:
the positioning reference signal being sent periodically;
or,
the positioning reference signal being sent aperiodically;
or,
the positioning reference signal being sent semi-persistently.

19. The method according to any one of claims 16 to 18, further comprising:
receiving resource request information sent by a terminal;
wherein the resource request information comprises suggestion configuration information of the positioning reference signal, the suggestion configuration information indicating that the priority of the positioning reference signal is the target priority, or, the resource request information comprises the first configuration information.

20. The method according to any one of claims 16 to 18, further comprising:
sending resource request information to an access network device, wherein the resource request information comprises suggestion configuration information of the positioning reference signal, and the suggestion configuration information indicates that the priority of the positioning reference signal is the target priority;
receiving the first configuration information sent by the access network device.

21. The method according to any one of claims 16 to 18, further comprising:
sending resource request information to an access network device, wherein the resource request information comprises the first configuration information.

22. An apparatus for configuring information, comprising:
a receiving module, configured to receive first configuration information, wherein the first configuration information indicates that a priority of a positioning reference signal is a target priority, and a positioning reference signal with the target priority is a positioning reference signal that the terminal does not perform measurement based on a measurement gap.

23. An apparatus for configuring information, comprising:
a receiving module, configured to receive resource request information;
wherein the resource request information comprises suggestion configuration information of a positioning reference signal, the suggestion configuration information indicating that a priority of the positioning reference signal is a target priority, or, the resource request information comprises first configuration information;
the first configuration information indicates that the priority of the positioning reference signal is the target priority, and the positioning reference signal with the target priority is a positioning reference signal that the terminal does not perform measurement based on a measurement gap.

24. An apparatus for configuring information, comprising:
a sending module, configured to send first configuration information, wherein the first configuration information indicates that a priority of a positioning reference signal is a target priority, and a positioning reference signal with the target priority is a positioning reference signal that the terminal does not perform measurement based on a measurement gap.

25. A terminal, comprising:
a processor;
a transceiver coupled to the processor;
wherein the processor is configured to load and execute executable instructions to implement the method for configuring information according to any one of claims 1 to 9.

26. An access network device, comprising:
a processor;
a transceiver coupled to the processor;
wherein the processor is configured to load and execute executable instructions to implement the method for configuring information according to any one of claims 10 to 15.

27. A location server, comprising:
a processor;
a transceiver coupled to the processor;
wherein the processor is configured to load and execute executable instructions to implement the method for configuring information according to any one of claims 16 to 21.

28. A computer-readable storage medium, having executable program codes stored thereon, wherein the executable program codes are loaded and executed by a processor to implement the method for configuring information according to any one of claims 1 to 21.
